# EUROPEAN PATENT SPECIFICATION

(11) **EP 1 929 179 B1**
(45) Date of publication and mention of the grant of the patent: **02.09.2009**
(21) Application number: 05802423.3
(22) Date of filing: 27.09.2005
(51) Int. Cl.: F16H 7/02, F16H 7/08, F16G 1/28

(54) **TOOTHED BELT DRIVE FOR USE IN OIL AND TOOTHED BELT THEREOF**
ZAHNRIEMENTRIEB ZUR VERWENDUNG IN ÖL UND ZAHNRIEMEN DAFÜR
ENTRAINEMENT PAR COURROIE CRANTEE A UTILISER DANS DE L'HUILE, ET COURROIE CRANTEE CORRESPONDANTE

(43) Date of publication of application: 11.06.2008
(73) Proprietor: Dayco Europe S.R.L. Con Unico Socio, Frazione Chieti Scalo 66013 Chieti (IT)
(72) Inventor: DI MECO, Marco, I-65129 Pescara (IT)
(74) Representative: Jorio, Paolo
(86) International application number: PCT/IT2005/000559
(87) International publication number: WO 2007/036960

(56) References cited:
- EP-A- 1 158 287
- EP-A- 1 217 256
- DE-A1- 10 230 739
- US-A- 3 151 491
- US-A- 5 273 496
- US-A- 5 624 337

## Description

### TECHNICAL FIELD

The present invention relates to a toothed belt for use in oil, according to the preamble of claim 1 and as it is disclosed in DE 10230739 A.

### BACKGROUND ART

There are known dry belt drives in which a double-toothed belt is connected by means of a pulley to a crankshaft of an internal combustion engine to drive rotating members, for example a pair of balancing countershafts, synchronously with the crankshaft.

In particular, a known double-toothed belt drive includes a drive pulley fed by the crankshaft, an idle jockey guide pulley, a pair of pulleys connected to respective balancing countershafts and a double-toothed belt for reciprocally connecting the aforesaid pulleys, and cooperating with a pulley tensioner to maintain a suitable tensioning and/or define a correct path of the belt.

In particular, the double-toothed belt presents an elastomeric material body reinforced with filiform elements embedded inside the body and respective internal and external toothing protruding from opposites parts of the body.

The internal toothing cooperates with the drive pulley, with the jockey guide pulley and with the countershaft pulley, and the external toothing cooperates with the pulley of the other countershaft and a toothed pulley of the pulley tensioner.

In this way, the countershafts turn in opposite directions and allow to attenuate the torsional vibrations of the internal combustion engine.

A problem related to the use of the known pulley tensioners is the relatively large dimension of the latter, which limits the freedom of design in drive configuration.

Recently, there have been developed belt used in oil.

US-A-5624337 discloses a toothed belt having a tooth design suitable to reduce noise during functioning.

### DISCLOSURE OF INVENTION

It is the object of the present invention to provide a toothed belt for use in oil which is compact and cost-effective, also in the presence of complex configurations.

The object of the present invention is achieved by a drive as defined in claim 1.

### BRIEF DESCRIPTION OF THE DRAWINGS

For a better understanding of the present invention, it will now be described a preferred embodiment only by way of non-limitative example, and with reference to the accompanying drawings, in which:
- figure 1 is a front view of a double-toothed belt according to the present invention;
- figure 2 is a partial longitudinal section of a double-toothed belt in figure 1; and
- figures 3 and 4 are longitudinal sections of respective alternative embodiments of the belt in figure 2.

### BEST MODE FOR CARRYING OUT THE INVENTION

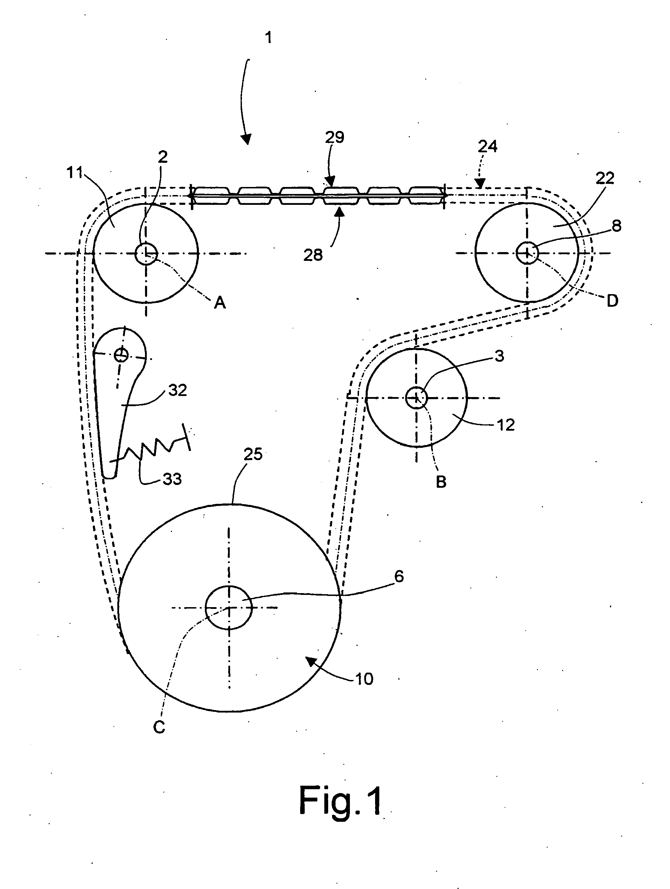

In figure 1 it is shown a belt drive 1 for an internal combustion engine (not shown) provided with two balancing countershafts 2, 3 having respective axes A and B and turning in respectively concordant and discordant directions with respect to a fixed rotation direction of the engine.

In particular, the belt drive 1 is connected to a crankshaft 6 of the engine with an axis C and defining a motion source, and a shaft 8 having an axis D of an accessory (not shown) and to the balancing shafts 2, 3, as will be better specified below.

The axes A, B, C, D are reciprocally parallel.

The belt drive 1 includes a drive pulley 10 rigidly connected to the crankshaft and turning around the axis C, a driven pulley 11 rigidly connected to the concordant countershaft 2 and turning around the axis A, a pulley 22 arranged on the opposite part of the driven pulley 11 with respect to the drive pulley 10 along a horizontal direction and rotating around the axis D to drive the shaft 8 of the accessory.

The belt drive 1 further includes a driven pulley 12 rigidly connected to the discordant countershaft and arranged between the pulley 22 and the drive pulley 10, and a double-toothed belt 24 to reciprocally connect the drive pulley 10 and the driven pulleys 11, 22 and 12.

Furthermore, the drive pulley 10 includes a pair or side edges 25 arranged on opposite parts of the toothed belt 24 along the axis C to guide the double-toothed belt 24.

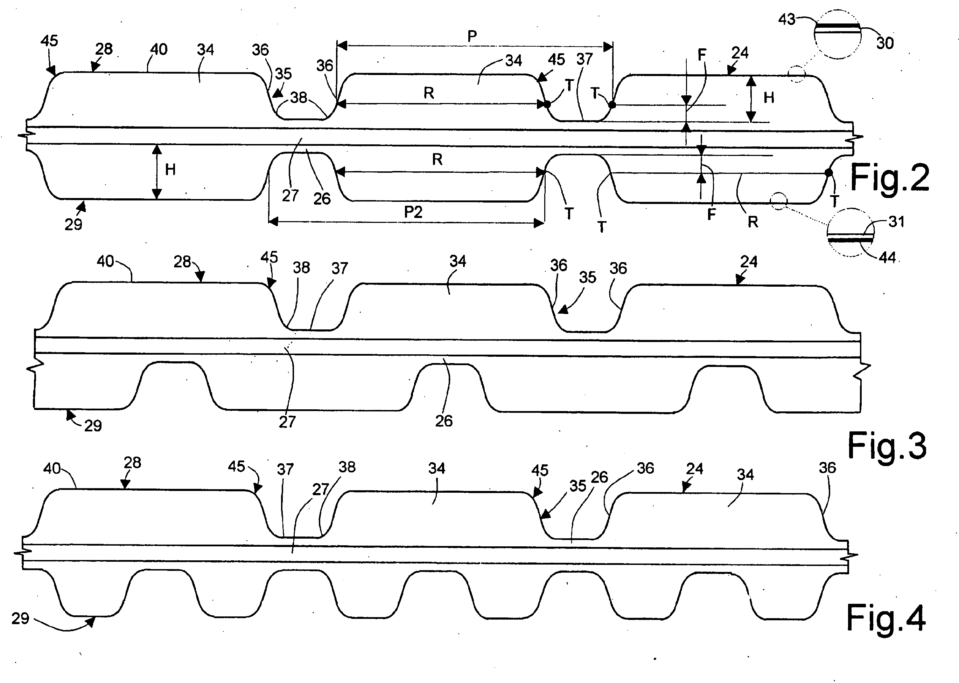

In particular (fig. 2), the double-toothed belt 24 includes an elastomeric material body 26 reinforced by a plurality of reinforcement inserts 27 longitudinally incorporated inside the body 26. The double-toothed belt 24 also defines respective internal and external toothing 28, 29 symmetrically arranged with respect to the filiform inserts 27, that is with the same pitch and same step, and covered by respective antiwear fabrics 30, 31.

The internal toothing 28 cooperates with the drive pulley 10 and the driven pulleys 11 and 22, and the external toothing 29 cooperates with the pulley 12; in this way, the two countershafts are fed in opposite rotation directions.

Additionally, the internal toothing 28 cooperates with a shoe 32 arranged between the drive pulley 10 and the driven pulley 11, and loaded by a spring 33 to pull the double-toothed belt 24.

In particular, the internal toothing 28 is defined by a sequence of teeth 34 and hollows 35 having a pitch P, and is shown in figure 2 in a straight configuration of the double-toothed belt 24 (that is in the configuration geometrically comparable to a rack).

The profile of the teeth 34 is defined by sides 36, for example parabolic, each joined to a bottom surface 37 of the adjacent hollow 35, by a concave circumference arc union 38 having a tangent point T defining an inflection point with the respective convex side 36; each tooth 34 conveniently presents a head surface 40 essentially straight and having a height H from the bottom surface 37 of the hollow 35.

Preferably, the internal toothing 28 presents the hollowing particularly functional shape ratios for cooperating with the shoe 32:
H/R comprised from 0.12 to 0.63;
R/P comprised from 0.55 to 0.90.
In the previous ratios, R indicates the distance between two tangent points T related to sides 36 of the same tooth 34.
Preferably, moreover, the internal toothing 28 meets the following shape ratio:
F/H comprised from 0.20 to 0.55,
where F indicates the height of the tangent point T, that is the distance of the point T from the extension of the bottom surface as shown in figure 2.

Still more preferably, the shape ratios are as follows:
H/R comprised from 0.12 to 0.39;
R/P comprised from 0.70 to 0.90;
and preferably:
F/H comprised from 0.30 to 0.55.

Preferably, the body 26 includes as main elastomer, that is present by more than 50% by weight with respect to the other elastomers used in the compound, a copolymer formed from a monomer containing nitrile groups and from a diene.

More preferably, the copolymer used is hydrogenated acrylonitrile butadiene.

Preferably, the copolymer used is obtained from monomers containing nitrile groups in a percentage from 33 to 49% by weight with respect to the final copolymer.

Still more preferably, the copolymer used is obtained from monomers containing nitrile groups in a percentage of 39% by weight with respect to the final copolymer, for example it is possible to use a compound constituted by 50% of THERBAN 3446 (Bayer registered trademark) and by 50% of THERBAN 4307 (Bayer registered trademark).

Advantageously, the elastomeric material compound also comprises fibres, preferably in a percentage by weight comprised from 0.5 to 15% with respect to the elastomeric material and preferably having a length comprised from 0.1 to 10 mm.

The fabrics 30 and 31 of the toothings 28, 29 can be formed by one or more layers and for example may be obtained by means of the weaving technique called 2x2 twill.

The fabrics 30 and 31 preferably consist of a polymeric material, preferably aliphatic or aromatic polyamide, still more preferably of a high heat resistant and high tenacity polyamide 6.6.

The fabrics 30 and 31 can also advantageously be of the type in which each weave thread consists of an elastic thread as core and at least one composite thread wound on the elastic thread, where the composite thread includes a high thermal and mechanical resistant thread and at least one covering thread wound on the high thermal and mechanical resistant thread.

According to a feature of the present invention, the belt 24 includes resistant layers 43 and 44 respectively externally arranged to the fabrics 30 and 31.

The resistant layers 43 and 44 consist of a fluorinated plastomer additivated with an elastomeric material and the fluorinated plastomer is present in higher amount by weight with respect to the elastomeric material.

An example of useable resistant layer is for example described in EP1157813 filed by the same applicant.

The fluorinated plastomer preferably consists of a polytetrafluoroethylene base compound.

Preferably, the elastomeric material with which the fluorinated plastomer is mixed to form the resistant layers 43 and 44 is HNBR, still more preferably it is a HNBR modified with a polymethacrylic acid zinc salt, for example ZEOFORTE ZSC (Nippon Zeon registered trademark).

Preferably, the resistant layers 43 and 44 to ensure the necessary resistance have a weight from 150 to 400 g/m2, which is equal to an average thickness from 0.050 to 1 mm.

Preferably, the fluorinated plastomer is present in quantities from 101 to 150 by weight per 100 parts of elastomeric material.

The resistant layers 43 and 44 also include a peroxide as vulcanisation agent. The amount of peroxide normally added is from 1 to 15 parts in weight with respect to 100 parts of elastomeric material.

Preferably between the fabrics 30 and 31 and the respective resistant layers 43 and 44 it is arranged an adhesive material.

The filiform inserts 27 are made of one or more materials chosen from the group consisting of glass fibres, aramidic fibres, polyester fibres, carbon fibres, PBO fibres.

Preferably, the filiform inserts 27 are of the "hybrid" type, that is are made of at least two different materials.

The first material is preferably made of glass fibre, the second material is preferably made of carbon fibre. Still more preferably, the glass fibres are high modulus.

The glass fibres are wound around the carbon fibres so as to externally cover at least partially the carbon fibres themselves, preferably so as to entirely cover the carbon fibres.

The filiform inserts 27 are preferably treated with a latex, resorcinol and formaldehyde based composition, known as RFL, and in particular with a RFL composition adapted to avoid the absorption of oil. Preferably, the RFL used therefore comprises a latex formed by a monomer containing nitrile groups and a diene, for example HNBR or hydrogenated acrylonitrile butadiene. Still more preferably the latex is obtained from monometers containing nitrile groups in a percentage by weight with respect to the final copolymer similar to the preferred elastomeric material used to form the previously described body 26.

In use, the internal toothing 28 shaped according to the previously described shape ratios allows to preserve an oil gap with the shoe 32 along the entire contact surface and to contain the contact pressures by decreasing the loads which stress the belt.

In particular, it results optimal a profile of the internal toothing 28 having distanced hollows 35 to increase the contact surface on the shoe 32 and to decrease the specific pressures. Furthermore, each hollow 35 defines an opening 45 facing the contact surface with the shoe 32 and such opening 45 facilitates the deposition of oil on the contact surface.

The oil entrapped in the hollows 35 is stressed by inertial forces proportional to the volume and adhesion forces proportional to the surface. For low height values H and relative large opening values 45, the adhesion force is maximised with respect to the inertia forces, 'entrapping' by adhesion the oil inside the hollow and reducing the leakages which escape laterally from the hollows 35. In this way, the oil is gradually released, adhering to the surface of the shoe 32 and improving the lubrication conditions.

The adduction on the contact surface between the shoe 32 and the internal toothing 28 of a continuous flow rate of oil allows to avoid reaching excessively high temperatures due to friction.

The use of a shoe in a belt drive for use in oil, cooperating against the toothing 28 allows to maintain a correct tension value in the double-toothed belt drive 7 reducing to the minimum the dimensions with respect to a conventional solution with pulley tensioner, and furthermore reducing costs.

Furthermore, the contact on the internal toothing 28, preferably dimensioned according to the previously defined shape ratios, allows to adduce on the contact surfaces a suitable flow rate of oil which reduces friction and wear.

The use of a fluorinated plastomer base resistant layer contributes to further reducing the friction coefficient on the shoe.

Furthermore, such layer protects the belt from the permeation of oil and thus limits the aggressive effects of the oil itself, particularly the negative effects on the adhesion between elastomeric material and resistant inserts.

It is finally apparent that modifications and variations can be implemented to the described transmission and belt without departing from the scope of protection defined by the claims.

In particular, it is possible to change the materials forming the belt body, the resistant inserts, the covering fabric and the profile of the toothing.

Furthermore, it is possible to envisage a different configuration of the drive assembly 1, for example the shoe 32 may be arranged also on the external toothing 29, or the transmission may be equipped with a toothed belt having a smooth back and a toothing cooperating with the shoe 32 if the dimensional needs require the tensioning of the toothed belt from the inside outwards.

In figures 3 and 4 there are shown respective embodiments of the toothed belt 24 in which the internal and external toothing 28, 29 present the same pitch P but are phase shifted, for example by P/2. In this way, it is possible to modify the bending rigidity of the toothed bet 24 to adapt it to the configuration of the drive and the mechanical characteristics of the resistant insert 27 used.

Furthermore, the external toothing 29 may present a different pitch P2 from the pitch P of the internal toothing 28, preferably so that P is an integer multiple of P2, to allow the use of pulleys more easily procurable on the market.

## Claims

1. A toothed belt (24) adapted to cooperate with a drive having a shoe, said belt having an elastomeric material body (26) reinforced with a plurality of filiform inserts (27) and at least one first toothing (28; 29) radially protruding from said body (26) and cooperating directly on said shoe preserving an oil gap and being **characterised in that** said first toothing (28; 29) defines a series of teeth (34) and hollows (35) having a pitch P, said teeth (34) having a root R and a height H, **in that** the H/R ratio is from 0.12 to 0.63 and the R/P ratio is from 0.55 to 0.90, and wherein
F/H is from 0.20 to 0.55, where F is the height of said root R with respect to a bottom (37) of one of said hollows (35).

2. A toothed belt according to claim 1, **characterised in that** H/R is from 0.12 to 0.39 and that R/P is from 0.70 to 0.90.

3. A toothed belt according to claim 2, **characterised in that** F/H is from 0.30 to 0.55.

4. A belt according to any of the preceding claims, **characterised in that** it comprises a second toothing (29) protruding from said body (26) on the opposite part of said at least one first toothing (28).

5. A toothed belt according to claim 4, **characterised in that** said second toothing (29) has a pitch (P2) different from said pitch (P).

6. A toothed belt according to claim 4, **characterised in that** said second toothing (29) has a pitch (P2) equal to said pitch (P).

7. A belt according to one of the claims 5 or 6, **characterised in that** said at least one first and second toothings (28, 29) are phase shifted.

8. A belt according to one of the claims 5 or 6, **characterised in that** said at least one first and second toothings (28, 29) have the same phase.

9. A toothed belt according to any of the preceding claims, **characterised in that** at least said first toothing (28; 29) is covered by an antiwear fabric (30; 31) coated with a resistant layer (43; 44) comprising a fluorinated plastomer additivated with an elastomeric material.

10. A toothed belt according to claim 9, **characterised in that** in said resistant layer (43; 44) said fluorinated plastomer is present in amount higher by weight than the elastomeric material.

11. A toothed belt according to claim 10, **characterised in that** said fluorinated plastomer is a polytetrafluoroethylene based compound.

12. A toothed belt according to claim 11, **characterised in that** said elastomeric material with which is mixed the fluorinated plastomer to form the resistant layer (43) includes a HNBR.

13. A toothed belt according to claim 12, **characterised in that** said elastomeric material is a HNBR modified with a polymethacrylic acid zinc salt.

14. A toothed belt according to any of the preceding claims from 4 to 13, **characterised in that** said second toothing (29) includes a second antiwear fabric (31) covered by a second resistant layer (44) including a fluorinated plastomer additivated with an elastomeric material.

15. A toothed belt according to any of the preceding claims, **characterised in that** said filiform inserts (27) consist of at least one material chosen from the group consisting of glass fibres, aramidic fibres, polyester fibres, carbon fibres, PBO fibres.

16. A toothed belt according to claim 15, **characterised in that** said filiform inserts (27) include glass fibres and carbon fibres.

17. A toothed belt according to one of the preceding claims, **characterised in that** said filiform inserts (27) are treated with a RFL comprising a latex formed by a monometer containing nitrile groups and a diene.

18. Use in oil of a belt drive including a first pulley (10) adapted to be connected to a power source (6), at least one second pulley (22) adapted to be connected to a rotating device (8), a toothed belt (24) according to any of the previous claims and a shoe (32) contacting said first toothing (28; 29) and maintaining a functioning tension value in said toothed belt (24).

## Patentansprüche

1. Ein Zahnriemen (24), der angepasst ist, um mit einem Antrieb, der einen Schuh hat, zusammenzuwirken, wobei der Riemen einen Körper (26) aus Elastomermaterial, der mit einer Vielzahl von fadenförmigen Einlagen (27) verstärkt ist, und zumindest eine erste Verzahnung (28; 29) hat, die von dem Körper (26) radial vorsteht und direkt an dem Schuh zusammenwirkt, wobei ein Ölzwischenraum beibehalten wird, wobei dieser **dadurch gekennzeichnet ist, dass** die erste Verzahnung (28; 29) eine Reihe von zähnen (34) und Leerräumen (35) mit einer Teilung P definiert, wobei die Zähne (34) einen Grund R und eine Höhe H haben, und dass das Verhältnis H/R von 0,12 bis 0,63 und das Verhältnis R/P von 0,55 bi 0,90 beträgt, und wobei F/H von 0,20 bis 0,55 beträgt, wobei F die Höhe des Grundes R in Bezug auf einen Boden (37) von einem der Leerräume (35) ist.

2. Ein Zahnriemen nach Anspruch 1, **dadurch gekennzeichnet, dass** H/R von 0,12 bis 0,39 beträgt und R/P von 0,70 bis 0,90 beträgt.

3. Ein Zahnriemen nach Anspruch 2, **dadurch gekennzeichnet, dass** F/H von 0,30 bis 0,55 beträgt.

4. Ein Riemen nach einem der vorhergehenden Ansprüche, **dadurch gekennzeichnet, dass** dieser eine zweite Verzahnung (29) von dem Körper (26) vorstehend an dem entgegengesetzten Teil von der zumindest einen Verzahnung (29) aufweist.

5. Ein Zahnriemen nach Anspruch 4, **dadurch gekennzeichnet, dass** die zweite Verzahnung (29) eine Teilung (P2) hat, die sich von der Teilung (P) unterscheidet.

6. Ein Zahnriemen nach Anspruch 4, **dadurch gekennzeichnet, dass** die zweite Verzahnung (29) eine Teilung gleich der Teilung (P) hat.

7. Ein Riemen nach einem der Ansprüche 5 oder 6, **dadurch gekennzeichnet, dass** die zumindest eine erste und zweite Verzahnung (28, 29) phasenverschoben sind.

8. Ein Riemen nach einem der Ansprüche 5 oder 6, **dadurch gekennzeichnet, dass** die zumindest eine erste und zweite Verzahnung (28, 29) die gleiche Phase haben.

9. Ein Zahnriemen nach einem der vorhergehenden Ansprüche, **dadurch gekennzeichnet, dass** zumindest die erste Verzahnung (28; 29) mit einem Antiabriebgewebe (30; 31) bedeckt ist, das mit einer Widerstandsschicht (43; 44) beschichtet ist, die ein fluoriertes Plastomer, dem ein Elastomermaterial hinzugefügt ist, aufweist.

10. Ein Zahnriemen nach Anspruch 9, **dadurch gekennzeichnet, dass** in der Widerstandsschicht (43; 44) das fluorierte Plastomer in einer Menge vorliegt, die im Gewicht höher als das Elastomermaterial ist.

11. Ein Zahnriemen nach Anspruch 10, **dadurch gekennzeichnet, dass** das fluorierte Plastomer eine polytetrafluoroethylen-basierte Verbindung ist,

12. Ein Zahnriemen nach Anspruch 11, **dadurch gekennzeichnet, dass** das Elastomermaterial, mit dem das fluorierte Plastomer zum Ausbilden der Widerstandsschicht (43) gemischt ist, ein HNBR aufweist.

13. Ein Zahnriemen nach Anspruch 12, **dadurch gekennzeichnet, dass** das Elastomermaterial ein HNBR ist, das mit einem Polymethakrylsäure-Zink-Salz modifiziert ist.

14. Ein Zahnriemen nach einem der vorhergehenden Ansprüche von 4 bis 13, **dadurch gekennzeichnet, dass** die zweite Verzahnung (29) ein zweites Antiabriebgewebe (31) aufweist, das mit einer zweiten Widerstandsschicht (44) bedeckt ist, die ein fluoriertes Plastomer, dem ein Elastomermaterial hinzugefügt ist, aufweist.

15. Ein Zahnriemen nach einem der vorhergehenden Ansprüche, **dadurch gekennzeichnet, dass** die fadenförmigen Einlagen (27) aus zumindest einem Material bestehen, das aus der Gruppe ausgewählt wurde, die aus Glasfasern, Aramidfasern, Polyesterfasern, Kohlefasern, PBO-Fasern besteht.

16. Ein Zahnriemen nach Anspruch 15, **dadurch gekennzeichnet, dass** die fadenförmigen Einlagen (27) Glasfasern und Kohlefasern aufweisen.

17. Ein Zahnriemen nach einem der vorhergehenden Ansprüche, **dadurch gekennzeichnet, dass** die fadenförmigen Einlagen (27) mit einem RFL mit einem Latex ausgebildet durch ein Monometer mit Nitrilgruppen und Dien behandelt sind.

18. Verwenden eines Riemenantriebs in Öl, der aufweist; eine erste Riemenscheibe (10), die angepasst ist, um mit einer Energiequelle (6) verbunden zu sein, zumindest eine zweite Riemenscheibe (22), die angepasst ist, um mit einer Rotationsvorrichtung (8) verbunden zu sein, einen Zahnriemen (24) nach einem der vorhergehenden Ansprüche und einen Schuh (32), der mit der ersten Verzahnung (28; 29) in Berührung steht und einen Funktionsspannungswert in dem Zahnriemen (24) aufrecht erhält.

## Revendications

1. Courroie crantée (24) conçue pour coopérer avec une transmission comportant un patin, ladite courroie comportant un corps de matériau élastomère (26) renforcé par une pluralité de pièces rapportées filiformes (27) et au moins une première denture (28 ; 29) dépassant radialement dudit corps (26) et coopérant directement sur ledit patin en préservant un espace pour l'huile et étant **caractérisé en ce que** ladite première denture (28 ; 29) définit une série de dents (34) et d'évidements (35) présentant un pas P, lesdites dents (30) comportant une base R et une hauteur H, **en ce que** le rapport H/R est de 0,12 à 0,63 et le rapport R/P est de 0,55 à 0,90 et où le rapport F/H est de 0,20 à 0,55, où F est la hauteur de ladite base R par rapport à un fond (37) d'un desdits évidements (35).

2. Courroie crantée selon la revendication 1, **caractérisée en ce que** le rapport H/R est de 0,12 à 0,39 et **en ce que** le rapport R/P est de 0,70 à 0,90.

3. Courroie crantée selon la revendication 2, **caractérisée en ce que** le rapport F/H est de 0,30 à 0,55.

4. Courroie selon l'une quelconque des revendications précédentes, **caractérisée en ce qu'**elle comprend une deuxième denture (29) dépassant dudit corps (26) sur la partie opposée de ladite au moins une première denture (28).

5. Courroie crantée selon la revendication 4, **caractérisée en ce que** ladite deuxième denture (29) présente un pas (P2) différent dudit pas (P).

6. Courroie crantée selon la revendication 4, **caractérisée en ce que** ladite deuxième denture (29) présente un pas (P2) égal audit pas (P).

7. Courroie selon l'une quelconque des revendications 5 ou 6, **caractérisée en ce que** lesdites au moins une première et deuxième dentures (28, 29) sont déphasées.

8. Courroie selon l'une des revendications 5 ou 6, **caractérisée en ce que** lesdites au moins une première et deuxième dentures (28, 29) présentent la même phase.

9. Courroie crantée selon l'une quelconque des revendications précédentes, **caractérisée en ce que** ladite au moins première denture (28 ; 29) est recouverte d'une étoffe anti-usure (33 ; 31) revêtue d'une couche résistante (43 ; 44) comprenant un plastomère fluoré ayant pour additif un matériau élastomère.

10. Courroie crantée selon la revendication 9, **caractérisée en ce que** dans ladite couche résistante (43 ; 44), ledit plastomère fluoré est présent en une quantité supérieure en poids à celle du matériau élastomère.

11. Courroie crantée selon la revendication 10, **caractérisée en ce que** ledit plastomère fluoré est un composé à base de polytétrafluoroéthylène.

12. Courroie crantée selon la revendication 11, **caractérisée en ce que** ledit matériau élastomère, avec lequel le plastomère fluoré est mélangé afin de former la couche résistante (43), comprend un HNBR.

13. Courroie crantée selon la revendication 12, **caractérisée en ce que** ledit matériau élastomère est un HNBR modifié avec un sel de zinc de l'acide polyméthacrylique.

14. Courroie crantée selon l'une quelconque des revendications précédentes 4 à 13, **caractérisée en ce que** ladite deuxième denture (29) comprend une deuxième étoffe anti-usure (31) revêtue d'une deuxième couche résistante (44) comprenant un plastomère fluoré ayant pour additif un matériau élastomère.

15. Courroie crantée selon l'une quelconque des revendications précédentes, **caractérisée en ce que** lesdites pièces rapportées filiformes (27) sont constituées d'au moins un matériau choisi parmi le groupe constitué de fibres de verre, de fibres aramides, de fibres de polyester, de fibres de carbone, de fibres de PBO.

16. Courroie crantée selon la revendication 15, **caractérisée en ce que** lesdites pièces rapportées ou inserts filiformes (27) comprennent des fibres de verre et des fibres de carbone.

17. Courroie crantée selon l'une quelconque des revendications précédentes, **caractérisée en ce que** lesdites pièces rapportées ou inserts filiformes (27) sont traitées avec une composition RFL comprenant un latex formé par un monomère contenant des groupes nitrile et un diène.

18. Utilisation dans l'huile d'une transmission par courroie comprenant une première poulie (10) conçue pour être reliée à une source de puissance (6), au moins une deuxième poulie (22) conçue pour être reliée à un dispositif de rotation (8), une courroie crantée (24) selon l'une quelconque des revendications précédentes et un patin (32) venant en contact avec ladite première denture (28 ; 29) et maintenant une valeur de tension en fonctionnement dans ladite courroie crantée (24).
